# FASCICULE DE BREVET EUROPEEN

(11) **EP 4 139 032 B1**
(45) Date de publication et mention de la délivrance du brevet: **24.07.2024**
(21) Numéro de dépôt: 21718057.9
(22) Date de dépôt: 01.04.2021
(51) Int. Cl.: B01F 27/091, B01F 27/702, B01F 27/723, B01F 35/92, B01F 35/95, B29B 17/04, B29K 95/00, B29L 31/10

(54) **MELANGEUR CHAUFFANT POUR PRODUITS COMPOSITES**
BEHEIZBARER MISCHER FÜR VERBUNDWERKSTOFFE
HEATABLE MIXER FOR COMPOSITE PRODUCTS

(30) Priorité: 22.04.2020 FR 2003999
(43) Date de publication de la demande: 01.03.2023
(73) Titulaire: SOPREMA, 67100 Strasbourg (FR)
(72) Inventeur: BINDSCHEDLER, Pierre-Etienne, 67000 STRASBOURG (FR); BALL, Patrick, 67140 BARR (FR)
(74) Mandataire: Cabinet Nuss
(86) Numéro de dépôt international: PCT/EP2021/058730
(87) Numéro de publication internationale: WO 2021/213793

(56) Documents cités:
- EP-A1- 0 231 584
- EP-A1- 2 015 019
- EP-A1- 3 330 653
- FR-A1- 3 060 417
- US-A1- 2019 145 065

## Description

[La présente invention concerne le domaine du recyclage et de la valorisation des déchets d'usine et de chantier dans le contexte des matériaux et systèmes d'étanchéité, en particulier en relation avec des membranes d'étanchéité bitumineuses, et a pour objet un mélangeur chauffant, une installation de traitement et de revalorisation de produits composites à base de matières thermoplastiques ainsi qu'un procédé de commande d'une telle installation.

Dans le cadre de la tendance générale à rechercher une possible valorisation des déchets, une demande grandissante, et actuellement non solutionnée de manière satisfaisante, ni au niveau technique, ni au niveau économique, concerne les déchets d'usine et surtout de chantiers dans le domaine de l'étanchéité, en particulier en relation avec les membranes d'étanchéité bitumineuses.

Le principal problème rencontré, et à ce jour non solutionné de manière satisfaisante, concerne la présence, souvent intriquée avec la matière à valoriser (essentiellement le liant bitumineux), de polluants non valorisables, notamment des particules solides dures, du type métalliques, minérales ou autres (provenant d'éléments d'assemblage ou de fixation, de couches de recouvrement, de couches de protection en surface, ou similaires).

En particulier, les déchets de déconstruction du marché de la rénovation représentent à ce jour un gisement potentiel important de membranes d'étanchéité à traiter, estimé à ce jour à environ 100 000 tonnes par an en France (estimation par la chambre syndicale de l'étanchéité française), ce gisement étant renouvelé chaque année. Le coût d'enfouissement de ces déchets augmente depuis de nombreuses années, et cette tendance devrait se poursuivre, surtout qu'aucune véritable solution industrielle de traitement des déchets de déconstruction n'est proposée à ce jour.

Il existe donc une demande forte et constante pour tenter de trouver une solution industrielle pour réduire la consommation d'une ressource fossile qui se raréfie et qui serait réellement efficiente dans le recyclage des membranes d'étanchéité.

Or, la constitution et donc le traitement de ces déchets sont complexes, car lors de réfections de toitures de bâtiments, il est possible, et pratique courante, de superposer plusieurs couches de membranes les unes sur les autres, et de les assembler par collage ou soudure, et de les fixer mécaniquement au support.

Toutefois, au bout d'un certain nombre de réfections (dépendant de la législation du pays concerné en la matière), il est nécessaire techniquement et obligatoire administrativement d'enlever la totalité du système de couverture et de mettre en place une nouvelle étanchéité sur la toiture (à charpente ; toitureterrasse ou autre) à l'état brut.

Les déchets récupérés à l'issue de cette opération d'enlèvement total, dits déchets de déconstruction, comprennent, pour l'essentiel, des stratifiés de membranes bitumeuses accolées les unes aux autres et présentant divers types de finition, notamment granulés d'ardoises, sable, feuilles d'aluminium complexé (PET-alu). Ces déchets peuvent également contenir des polluants solides, notamment isolant (PUR, XPS, laine minérale, fibres de bois...), pièces métalliques (accroches métalliques des membranes fixées mécaniquement, lames de scie pour la découpe des déchets...), et autres détritus divers associés à l'entreposage d'une benne de récupération des déchets sur un chantier de bâtiment (cailloux, pierres, canettes...).

Ainsi, en relation avec la demande exprimée ci-dessus, les produits composites qu'il serait souhaitable de pouvoir traiter dans le cadre du champ d'application concerné par l'invention comprennent essentiellement :
- majoritairement des membranes bitumeuses contenant une armature par ex. : Polyester non tissé PNT ou voile de verre...), un liant bitumineux (ex : polymère et bitume, additifs, charge...), une finition de surface (ex : granulés d'ardoises sable, feuilles d'aluminium complexées...). Potentiellement ces membranes sont agglomérées en couches successives fusionnées les unes aux autres lors de la pose par chauffage, et formant ainsi des plaques (Dimension des plaques récupérées : ~ 1 m x ~1 m x (1 à 20) cm). Alternativement, les produits à traiter peuvent comprendre des rouleaux de membranes bitumeuses issus de production (second choix) ou des chutes de fabrication de tels rouleaux. Alternativement ces membranes peuvent être prébroyées.
- des polluants solides de diverses natures : isolants (PUR, XPS, laine minérale, fibres de bois...), pièces métalliques (accroches métalliques des membranes fixées mécaniquement, lames de scie pour la découpe des déchets...), ou détritus divers (sable, gravillons, cailloux, pierres, canettes...).

A l'issue d'au moins une première phase du traitement, le produit sortant (extrant) devrait comprendre en particulier des liants lisses à base de bitume, intégrant également des polymères et des particules ou des fragments de fibres dispersés, préférentiellement de dimension inférieure à 100 µm.

De plus, alors que les intrants sont à température ambiante (typiquement entre 0°C et 30°C), l'extrant de cette première de traitement devrait, par transformation adéquate des intrants, être au moins à la température d'utilisation, des liants bitumineux et thermoplastiques, à savoir entre 150°C et 200°C typiquement.

Un tel état de l'extrant facilite son traitement ultérieur, en particulier l'extraction des polluants solides macroscopiques, non ou insuffisamment réduits durant cette première phase de traitement (tels que cailloux, pierres, gravillons, vis, boulons, rivets, clous, fragments de tôle,...), ainsi que son transfert ultérieur et son conditionnement sous une forme valorisable et avantageusement réutilisable.

Pour ce faire, et compte tenu du type d'intrants à transformer / valoriser et de leur état à l'entrée, le dispositif technique réalisant ladite (au moins) première phase de traitement devrait réaliser, progressivement et simultanément, un chauffage des intrants jusqu'à aboutir à une température de ramollissement / fusion du liant bitumineux (au moins à proximité de la sortie) et un cisaillement des membranes (prédécoupées ou pas) pour aboutir à un délitement de leurs armatures et à leur désagrégation. Ce dispositif devrait en outre autoriser le passage des polluants macroscopique durs précités, sans risque de blocage, et présenter préférentiellement un taux d'usure limité.

Or, les appareils et installations connus à ce jour pour le recyclage du type de produits précité ne permettent pas de répondre à la demande ci-dessus, ni d'aboutir au résultat souhaité, en tout cas pas de manière fiable et pérenne.

Ainsi, les séparateurs de polluants métalliques ferromagnétiques (à aimants) ou non ferromagnétiques (à courant de Foucault) ne ciblent qu'un type de polluants ne transforment pas ou insuffisamment les produits extrants, et n'autorisent pas une extraction d'éléments noyés, imbriqués ou trop intimement liés aux matériaux à valoriser.

De même, les systèmes basés sur la séparation du fait de différences de densités entre composantes, du type systèmes centrifuge, tables densimétriques, dispositif à décantation ou analogues, sont soit inefficaces, soit économiquement non viables.

Certains dispositifs connus assurent de manière satisfaisante certaines des fonctions précitées attendues pour la première phase de traitement, mais pas toutes.

Ainsi, les dispositifs de traitement du type pétrin à bras en Z chauffés réalisent un bon cisaillement, mais un mauvais chauffage (procédé réalisé par fournée / lot), et les mélangeurs à rames ("paddle mixer") présente un chauffage satisfaisant des produits et sont robustes aux polluants, mais réalisent un cisaillement médiocre.

En outre, les systèmes connus (cf. notamment WO 2008/103035, US 2005/263625, EP 1 123 182 et WO 2009/090546) sous forme d'extrudeuses ou de convoyeurs à vis hélicoïdale classique, sont quant à eux sujets à blocage lors de la présence d'une particule macroscopique dure (type vis, boulon) et subissent une usure importante et rapide en présence de particules dures microscopiques (tel que du sable).

Enfin, on connait également des convoyeurs-mélangeurs à double vis d'Archimède, dans lesquels les vis ainsi que l'auge sont chauffées : elles réalisent un bon chauffage et un bon cisaillement, mais sont également sujets aux blocages et à l'usure importante mentionnées ci-dessus lors du traitement de produits/déchets composites évoqués précédemment.

En particulier, on connait par le document EP 0 231 584 un mélangeur chauffant à double vis pour le traitement de produits composites à base de matière(s) thermoplastique(s) selon le préambule de la revendication 1.

Le but principal de l'invention est d'améliorer les mélangeurs à vis connus précités pour surmonter leurs limitations.

A cet effet, l'invention a pour objet un mélangeur chauffant pour produits composites à base de matière(s) thermoplastique(s) selon le préambule de la revendication 1 et présentant également les caractéristiques de la partie caractérisante de ladite revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1A] est une vue éclatée d'un mélangeur chauffant selon l'invention ;
[Fig. 1B] est une vue en perspective et de dessus d'un mélangeur chauffant selon la figure 1A, le couvercle de fermeture de l'auge étant enlevé ;
[Fig. 2A] est une vue en coupe selon un plan vertical contenant l'axe longitudinal du mélangeur de la figure 1B ;
[Fig. 2B] est une vue en élévation selon la direction de l'axe longitudinal et partiellement en transparence du mélangeur représenté figure 1B ;
[Fig. 3] est une vue de dessus des deux vis faisant partie du mélangeur des figures 1 et 2 ;
[Fig. 4] est une vue en coupe selon A - A du mélangeur de la figure 1B ;
[Fig. 5] est une vue partielle et en perspective du mélangeur de la figure 4 ;
[Fig. 6] est une vue de détail d'une structure de raclage faisant partie du mélangeur représenté figures 4 et 5, et,
[Fig. 7] est une vue en perspective d'une installation de traitement et de revalorisation comprenant deux mélangeurs selon les figures 1 à 5, montés en parallèle et formant les premiers postes de traitement de cette installation.

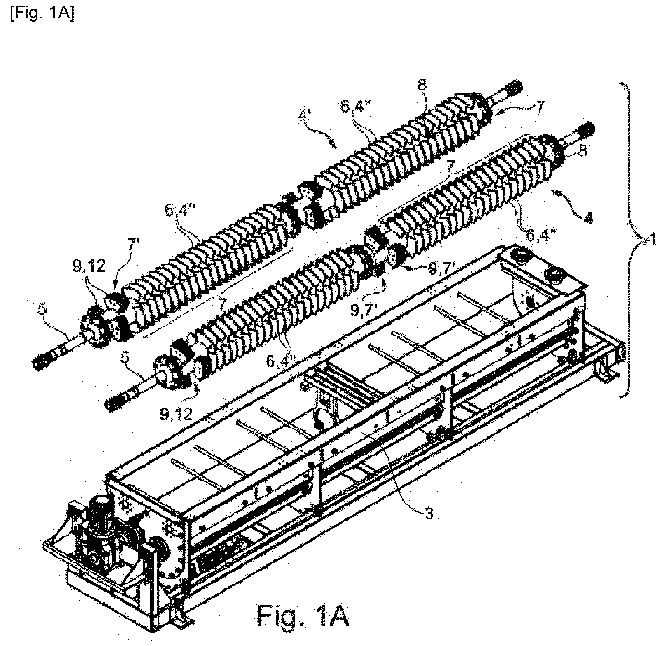

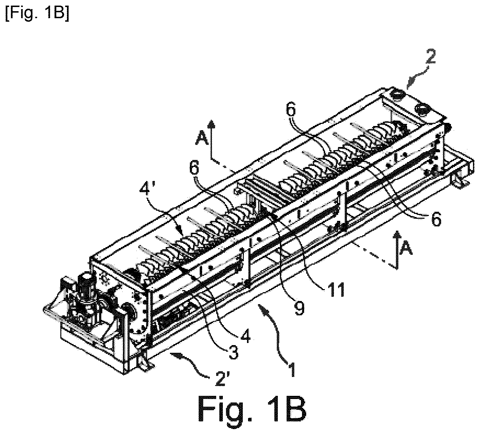

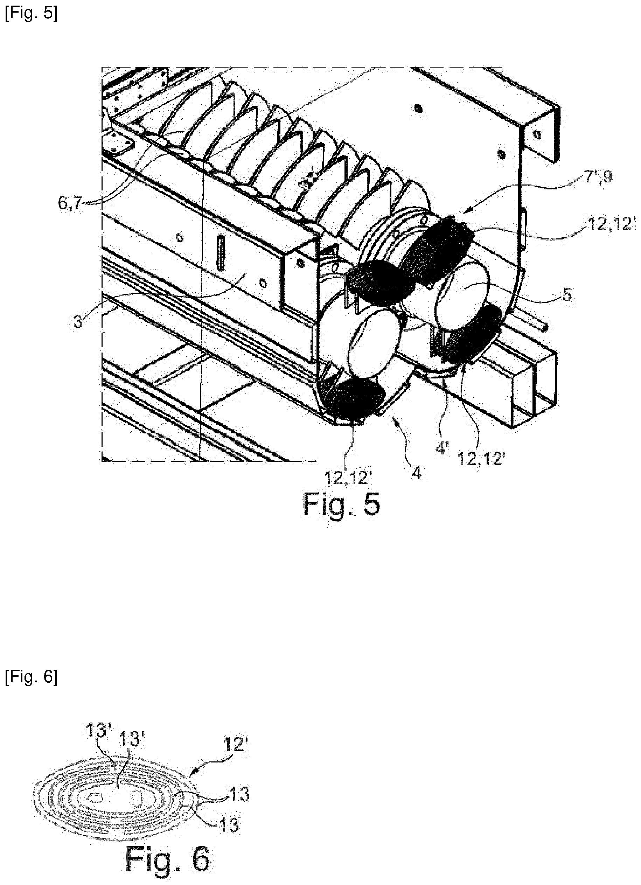

Les figures 1 à 7 illustrent, au moins en partie, un mélangeur chauffant 1 pour produits composites à base de matière(s) thermoplastique(s), notamment de déchets d'usines ou de chantiers contenant majoritairement des membranes bitumineuses.

Ce mélangeur 1 présente une constitution allongé définissant un trajet de traitement longitudinal entre une entrée 2 et une sortie 2' et comprend une auge chauffée 3 dans laquelle est montée au moins une vis 4, 4', préférentiellement deux vis 4 et 4' jumelées parallèles et mutuellement interpénétrantes, formant organe(s) de réduction dimensionnelle, de chauffage et de déplacement pour les produits à traiter introduits au niveau de l'entrée 2, ladite ou chaque vis 4, 4' comprenant un arbre support 5 chauffé et entrainé, disposé selon la direction de trajet DT.

Le filet 4" de la ou chaque vis 4, 4' est un filet interrompu ou discontinu et comprend, sur une majeure partie au moins de la longueur de la vis 4, 4' considérée, une pluralité de premières pales 6 en forme de plaques planes et lisses, séparées entre elles axialement et radialement et toutes arrangées selon un pas de vis constant et avec une inclinaison déterminée par rapport à un plan perpendiculaire à l'axe AV de la vis 4, 4' considérée.

Le filet hélicoïdal 4"" de chacune des deux vis 4 et 4', qui tournent selon des sens de rotation mutuellement contraires de manière à générer un mouvement de transport de matière de l'entrée 2 vers la sortie 2' de l'auge 3 (selon la direction DT), est donc constitué par une pluralité de pales 6 en forme de secteurs d'anneau plans, distincts et séparés, solidarisés (par soudage par exemple) avec l'arbre 5 de la vis 4, 4' concernée le long d'une ligne hélicoïdale. De plus, ces pales 6 sont arrangées avec un espacement mutuel et une extension angulaire individuelle tels que des alignements 7 longitudinaux de pales 6 sont constitués.

Préférentiellement, chaque première pale 6 présente une extension angulaire autour de l'arbre considéré qui est inférieure à 180°, avantageusement inférieure à 120°, préférentiellement d'environ 90°. De plus, lesdites premières pales 6 sont configurées et arrangées sur l'arbre support 5 concerné de manière à constituer un nombre limité d'alignements 7 de pales 6 selon la direction de l'axe AV de la vis 4, 4', qui sont répartis sur le pourtour de l'arbre support 5 et qui définissent entre eux des zones dégagées 8 s'étendant le long de la vis 4, 4' entre alignements 7 voisins.

Ainsi chacune des vis 4, 4' se présente sensiblement comme une vis d'Archimède à filet hélicoïdal continue, mais découpé selon la direction de l'axe AV de l'arbre 5 pour former des trouées rectilignes parallèles audit axe AV.

Ce sont les espacements entre les pales 6, et plus particulièrement les passages en forme de trouées résultants, qui autorisent le transport sans blocage des polluants macroscopiques de l'entrée 2 vers la sortie 2'.

Avantageusement, l'auge 3 comporte une double enveloppe et l'arbre 5 est un tube creux, les deux étant parcourus par un fluide chaud (huile). De plus, les pales 6 métalliques sont relativement épaisses (par exemple 8 à 15 mm) de manière à garantir une certaine inertie thermique pour chauffer le bitume dans la masse, tout en happant et en "démottant" les intrants sous forme de membranes. (effet "introduction couteau chaud dans beurre froid"). En outre, en étant planes et lisses, les pales 6 n'offrent aucune accroche au liant bitumeux ou autre.

En accord avec l'invention et comme illustrée sur les figures 1, 2, 4 et 5, il est prévu que la ou chaque vis 4, 4' comporte, sur au moins une partie de sa longueur, une pluralité de secondes pales 9 en forme de plaques planes, séparées entre elles et toutes arrangées selon des plans perpendiculaires à l'axe de la vis 4, 4' considérée, que chaque seconde pale 9 présente une extension angulaire inférieure à 180°, avantageusement inférieure à 120°, préférentiellement d'environ 90°, et que lesdites secondes pales 9 sont configurées et arrangées sur l'arbre support 5 concerné de manière à constituer un nombre limité d'alignements 7' de pales selon la direction de l'axe AV de la vis 4, 4' et autour de l'arbre 5, des zones dégagées s'étendant entre les alignements 7' voisins (angulairement ou circonférentiellement) le long de la vis 4, 4'.

Alors que les premières pales 6 sont montées sur l'arbre 5 respectif avec une inclinaison par rapport à un plan perpendiculaire à l'axe AV dudit arbre, les secondes pales 9 sont quant à elles montrées perpendiculairement à cet axe AV.

Avantageusement, chaque alignement 7' de secondes pales 9 ne s'étend que sur une fraction de la longueur de la partie de la vis 4, 4' les comportant et sur une fraction du pourtour de l'arbre 5 de cette dernière et constitue au moins un groupe local de secondes pales 9, chaque groupe étant décalé angulairement et/ou axialement par rapport à chacun des autres groupes et au moins un, préférentiellement chaque, groupe de secondes pales 9 d'une vis 4, 4' venant en engagement interpénétrant, de manière interstitielle, avec un groupe correspondant de secondes pales 9 de l'autre vis 4', 4.

Additionnellement ou alternativement, l'auge 3 peut comporter, sur une partie au moins de sa face interne, située en regard de la ou des partie(s) longitudinale(s) de la vis 4, 4' comportant des secondes pales 9, des contre-pales fixes, situées dans des plans parallèles et interstitiels par rapport aux plans des secondes pales 9 et venant en engagement interpénétrant avec les secondes pales 9 lors de la rotation de la vis 4, 4' considérée, chaque arrangement coopérant d'au moins deux groupes de secondes pales 9 mobiles appartenant respectivement à l'une des deux vis 4, 4', et éventuellement de contre-pales fixes, constituant un module 11 de cisaillement privilégié.

Ainsi, les secondes pales 9 des vis 4, 4' ne sont pas seulement interférantes et interpénétrantes entre les deux vis 4 et 4', mais aussi avec des contres-pales fixes installées dans l'auge 3, par exemple sur une structure support montée de manière interchangeable dans l'auge 3 (non représenté).

Les zones du mélangeur 1 comportant des groupes de pluralités de secondes pales 9 mobiles, et éventuellement de contre-pales fixes, constituent, du fait de la densité d'éléments formant lames interpénétrantes avec de faibles entrefers, des modules de cisaillement intense. Le mélangeur 1 peut comporter un ou plusieurs tel(s) module(s), le cas échéant répartis le long de l'auge 3. Préférentiellement, un (dernier) module de cisaillement est arrangé près de la sortie du mélangeur 1.

La prévision d'une répartition des secondes pales 9 par alignements 7' espacés circonférentiellement et/ou axialement permet aux polluants macroscopiques solides de passer les zones de ces modules sans bloquer les vis 4, 4'.

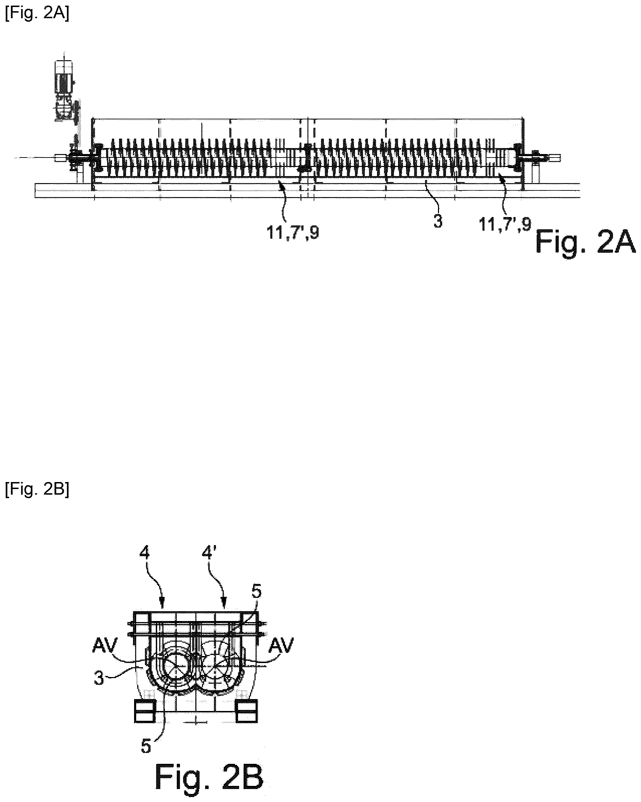

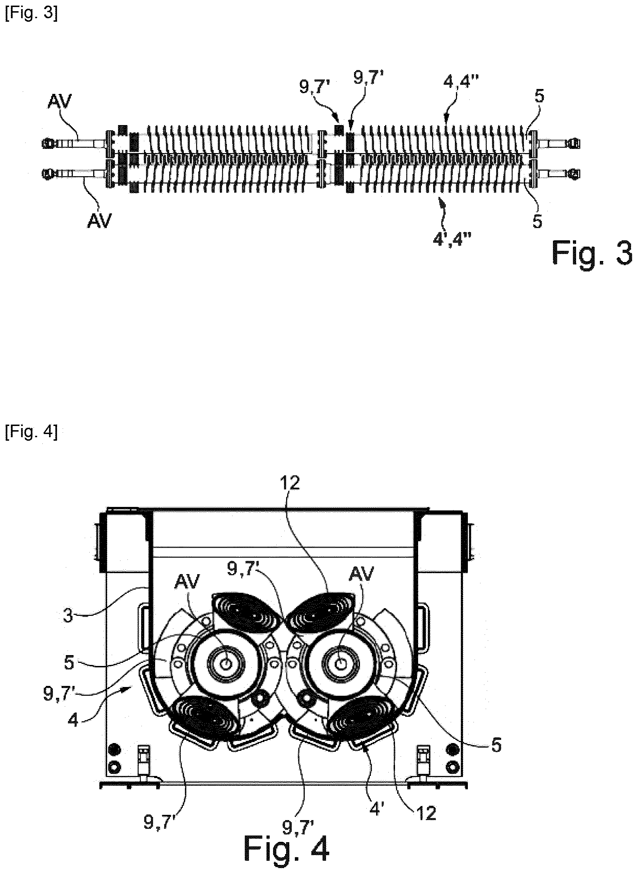

Comme le montrent à titre d'exemple illustratif les figures 2A et 3, la ou chaque vis est avantageusement constituée de segments longitudinaux différenciés comportant alternativement des alignements de premières pales 6 inclinées et des alignements de secondes pales 9 perpendiculaires.

Afin de limiter l'usure des premières et/ou secondes pales 6, 9 (par l'aménagement d'un entrefer suffisant entre leurs bords extérieurs et la paroi de l'auge 3), tout en favorisant, d'une part, le transfert thermique entre les vis 4, 4' et/ou l'auge 3 et les produits à traiter en transit et, d'autre part, le cisaillement (malgré la présence d'un entrefer important - par exemple 0,5 mm à 3 à 5 cm - entre pales 6, 9 et auge 3), il peut être prévu qu'au moins certaines premières et/ou secondes pales 6, 9 sont pourvues, au niveau de leur bord libre extérieur 9', d'au moins une structure de raclage 12 rapportée, saillante radialement par rapport audit bord 9' et déformable élastiquement au moins selon une direction radiale (voir figures 4 à 6).

En accord avec un mode de réalisation préféré, ressortant des figures précitées, la ou chaque structure rapportée déformable 12 consiste en une plaquette 12', ou en un empilement d'au moins deux plaquettes 12', à contour sensiblement de forme elliptique et comportant des découpes définissant une pluralité d'anneaux elliptiques 13 concentriques, reliées par des ponts de matière 13' entre anneaux 13 adjacents, ladite structure 12 étant montée sur la pale 6, 9 correspondante avec une orientation telle que la direction du petit demi-axe du contour elliptique passe par l'axe longitudinal AV de l'arbre support 5.

Bien que non représenté, le mélangeur chauffant 1 selon l'invention peut ne comporter qu'une seule vis.

Toutefois de manière préférée, ledit mélangeur 1 comporte deux vis parallèles jumelées 4 et 4' dont les pales 6, 9 respectives s'entrecroisent intimement sur une partie au moins de leur hauteur, préférentiellement une partie majoritaire, soit dans au moins une zone d'engrènement mutuel de filets contraires de premières pales 6 inclinées par rapport à l'axe de l'arbre support 5, soit dans au moins une zone d'interpénétration mutuelle de secondes pales 9 perpendiculaires à l'axe de l'arbre support 5, avantageusement dans les deux types de zones.

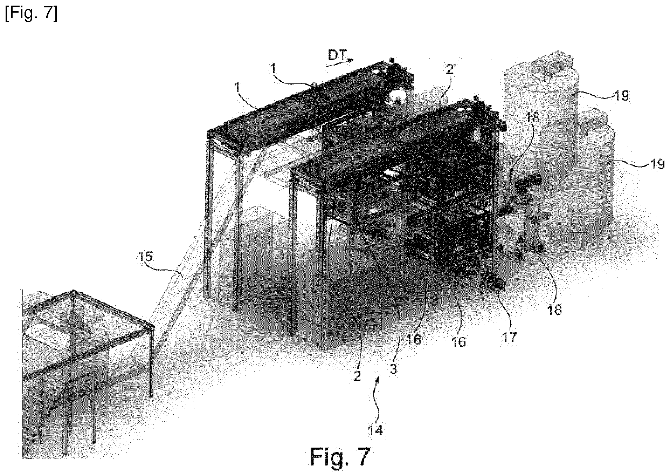

L'invention a également pour objet, comme le montre par exemple la figure 7, une installation 14 de traitement et de revalorisation de produits composites à base thermoplastique, par exemple de déchets intégrant à titre majoritaire des produits bitumineux, notamment des membranes bitumineuses.

Cette installation 14 est caractérisée en ce qu'elle comprend, en tant que poste(s) de traitement, au moins un mélangeur 1 tel que décrit précédemment, préférentiellement en tant que premier poste de traitement.

Comme représenté figure 7, l'installation 14 peut comprendre deux mélangeurs chauffants 1 tels que décrit ci-dessus, montés en parallèles, alimentés en intrants par une bande transporteuse 15 (transportant par exemple des déchets pré-découpés) et formant chacun le premier poste d'une voie de traitement et de revalorisation, respectivement associé en aval.

Les mélangeurs 1 sont installés en hauteur et leurs extrants liquides ou semiliquides chutent à travers deux postes de broyages 16 superposés formés chacun d'un broyeur à rouleaux opposés (dont les entrefers sont alignés). Entre les deux postes 16 peut être, arrangé un dispositif séparateur de polluants macroscopiques solides sous la forme d'un dispositif de rejet (non spécifiquement visible) à organe extracteur mobile (par pivotement). Ensuite, l'extrant purifié de polluants macroscopiques peut être transféré (par exemple par une pompe 17 délicératrice) dans un raffineur 18 avec un tambour monté mobile excentriquement dans une enceinte cylindrique, pour ensuite être stocké dans un réservoir 19, sous forme de produit valorisé réutilisable.

L'invention vise également un procédé de commande d'un mélangeur 1 tel que décrit précédemment, consistant à entrainer la ou les vis 4, 4' avec un protocole de commande comprenant au moins deux phases d'entrainement provoquant un déplacement des matériaux dans le mélangeur 1 selon la direction DT du trajet de traitement, séparées par au moins une phase d'entrainement contraire, c'est-à-dire provoquant un déplacement des matériaux traités dans la direction opposée au trajet de traitement, l'occurrence, la durée et le nombre des phases d'entrainement contraire étant soit prédéterminés, soit fonction de valeurs fournies par des capteurs de mesure de paramètres de fonctionnement, tels que par exemple le couple d'entrainement, la composition et/ou la qualité des produits traités, la quantité de matériaux présents dans le mélangeur 1.

Bien entendu, l'invention n'est pas limitée au mode de réalisation décrit et représenté aux dessins annexés.

## Revendications

1. Mélangeur chauffant (1) pour produits composites à base de matière(s) thermoplastique(s), notamment de déchets d'usines ou de chantiers contenant majoritairement des membranes bitumineuses, ledit mélangeur (1) présentant une constitution allongé définissant un trajet de traitement longitudinal entre une entrée (2) et une sortie (2') et comprenant une auge chauffée (3) dans laquelle est montée au moins une vis (4, 4'), préférentiellement deux vis (4 et 4') jumelées parallèles et mutuellement interpénétrantes, formant organe(s) de réduction dimensionnelle, de chauffage et de déplacement pour les produits à traiter introduits au niveau de l'entrée (2), ladite ou chaque vis (4, 4') comprenant un arbre support (5) chauffé et entrainé, disposé selon la direction de trajet (DT), mélangeur (1) dans lequel le filet (4") de la ou chaque vis (4, 4') est un filet interrompu ou discontinu et comprend, sur une majeure partie au moins de la longueur de la vis (4, 4') considérée, une pluralité de premières pales (6) en forme de plaques planes et lisses, séparées entre elles axialement et radialement et toutes arrangées selon un pas de vis constant et avec une inclinaison déterminée par rapport à un plan perpendiculaire à l'axe (AV) de la vis (4, 4') considérée,
mélangeur (1) **caractérisé en ce que** la ou chaque vis (4, 4') comporte, sur au moins une partie de sa longueur, une pluralité de secondes pales (9) en forme de plaques planes, séparées entre elles et toutes arrangées selon des plans perpendiculaires à l'axe de la vis (4, 4') considérée, **en ce que** chaque seconde pale (9) présente une extension angulaire inférieure à 180°, avantageusement inférieure à 120°, préférentiellement d'environ 90°, et **en ce que** lesdites secondes pales (9) sont configurées et arrangées sur l'arbre support (5) concerné de manière à constituer un nombre limité d'alignements (7') de pales selon la direction de l'axe (AV) de la vis (4, 4') et autour de l'arbre (5), des zones dégagées s'étendant entre les alignements (7') voisins le long de la vis (4, 4').

2. Mélangeur selon la revendication 1, **caractérisé en ce qu'**au moins certaines premières et/ou secondes pales (6, 9) sont pourvues, au niveau de leur bord libre extérieur (9'), d'au moins une structure de raclage (12) rapportée, saillante radialement par rapport audit bord (9') et déformable élastiquement au moins selon une direction radiale

3. Mélangeur selon la revendication 1 ou 2, **caractérisé en ce que** chaque première pale (6) présente une extension angulaire autour de l'arbre considéré qui est inférieure à 180°, avantageusement inférieure à 120°, préférentiellement d'environ 90°, et **en ce que** lesdites premières pales (6) sont configurées et arrangées sur l'arbre support (5) concerné de manière à constituer un nombre limité d'alignements (7) de pales (6) selon la direction de l'axe (AV) de la vis (4, 4'), qui sont répartis sur le pourtour de l'arbre support (5) et qui définissent entre eux des zones dégagées (8) s'étendant le long de la vis (4, 4') entre alignements (7) voisins.

4. Mélangeur selon l'une quelconque des revendications 1 à 3, **caractérisé en ce que** chaque alignement (7') de secondes pales (9) ne s'étend que sur une fraction de la longueur de la partie de la vis (4, 4') les comportant et sur une fraction du pourtour de l'arbre (5) de cette dernière et constitue au moins un groupe local de secondes pales (9), chaque groupe étant décalé angulairement et/ou axialement par rapport à chacun des autres groupes et au moins un, préférentiellement chaque, groupe de secondes pales (9) d'une vis (4, 4') venant en engagement interpénétrant, de manière interstitielle, avec un groupe correspondant de secondes pales (9) de l'autre vis (4', 4).

5. Mélangeur selon l'une quelconque des revendications 1 ou 4, **caractérisé en ce que** l'auge (3) comporte, sur une partie au moins de sa face interne, située en regard de la ou des partie(s) longitudinale(s) de la vis (4, 4') comportant des secondes pales (9), des contre-pales fixes, situées dans des plans parallèles et interstitiels par rapport aux plans des secondes pales (9) et venant en engagement interpénétrant avec les secondes pales (9) lors de la rotation de la vis (4, 4') considérée, chaque arrangement coopérant d'au moins deux groupes de secondes pales (9) appartenant respectivement à l'une des deux vis (4, 4'), et éventuellement de contre-pales, constituant un module (11) de cisaillement privilégié.

6. Mélangeur selon l'une quelconque des revendications 1 à 5, **caractérisé en ce que** la ou chaque vis (4, 4') est constituée de segments longitudinaux différenciés comportant alternativement des alignements de premières pales (6) inclinées et des alignements de secondes pales (9) perpendiculaires.

7. Mélangeur selon la revendication 2 ou l'une quelconque des revendications 3 à 6 pour autant qu'elles dépendent de la revendications 2, **caractérisé en ce que** la ou chaque structure rapportée déformable (12) consiste en une plaquette (12'), ou en un empilement d'au moins deux plaquettes (12'), à contour sensiblement de forme elliptique et comportant des découpes définissant une pluralité d'anneaux elliptiques (13) concentriques, reliées par des ponts de matière (13') entre anneaux (13) adjacents, ladite structure étant montée sur la pale (6, 9) correspondante avec une orientation telle que la direction du petit demi-axe du contour elliptique passe par l'axe longitudinal (AV) de l'arbre support (5) correspondant.

8. Mélangeur selon l'une quelconque des revendications 1 à 7, **caractérisé en ce qu'**il comporte deux vis parallèles jumelées (4 et 4') dont les pales (6, 9) respectives s'entrecroisent intimement sur une partie au moins de leur hauteur, préférentiellement une partie majoritaire, soit dans au moins une zone d'engrènement mutuel de filets contraires de premières pales (6) inclinées par rapport à l'axe de l'arbre support (5), soit dans au moins une zone d'interpénétration mutuelle de secondes pales (9) perpendiculaires à l'axe de l'arbre support (5), avantageusement dans les deux types de zones.

9. Installation (14) de traitement et de revalorisation de produits composites à base thermoplastique, par exemple de déchets intégrant à titre majoritaire des produits bitumineux, notamment des membranes bitumineuses, **caractérisée en ce qu'**elle comprend, en tant que poste(s) de traitement, au moins un mélangeur (1) selon l'une quelconque des revendications 1 à 8, préférentiellement en tant que premier poste de traitement.

10. Procédé de commande d'un mélangeur (1) selon l'une quelconque des revendications 1 à 8, consistant à entrainer la ou les vis (4, 4') avec un protocole de commande comprenant au moins deux phases d'entrainement provoquant un déplacement des matériaux dans le mélangeur (1) selon la direction (DT) du trajet de traitement, séparées par au moins une phase d'entrainement contraire, c'est-à-dire provoquant un déplacement des matériaux traités dans la direction opposée au trajet de traitement, l'occurrence, la durée et le nombre des phases d'entrainement contraire étant soit prédéterminés, soit fonction de valeurs fournies par des capteurs de mesure de paramètres de fonctionnement, tels que par exemple le couple d'entrainement, la composition et/ou la qualité des produits traités, la quantité de matériaux présents dans le mélangeur (1).

## Patentansprüche

1. Beheizbarer Mischer (1) für Verbundprodukte auf Basis von einem oder mehreren thermoplastischen Materialien, insbesondere von Fabrik- oder Baustellenabfällen, die überwiegend bituminöse Dichtungsbahnen enthalten, wobei der Mischer (1) einen langgestreckten Aufbau aufweist, der einen längs verlaufenden Verarbeitungsweg zwischen einem Einlass (2) und einem Auslass (2') definiert, und einen beheizten Trog (3) umfasst, in dem mindestens eine Schnecke (4, 4') angebracht ist, bevorzugt zwei parallele und ineinander kämmende Doppelschnecken (4 und 4'), die ein bzw. mehrere Zerkleinerungs-, Beheizungs- und Verlagerungsorgan(e) für die zu verarbeitenden Produkte bilden, die an dem Einlass (2) zugeführt werden, wobei die oder jede Schnecke (4, 4') eine beheizte und angetriebene Stützwelle (5) umfasst, die entlang der Wegrichtung (DT) angeordnet ist, Mischer (1), in dem der Schraubengang (4") der oder jeder Schnecke (4, 4') ein unterbrochener oder diskontinuierlicher Schraubengang ist und, über mindestens einen Großteil der Länge der betrachteten Schnecke (4, 4'), eine Vielzahl von ersten Schaufeln (6) in Form von ebenen und glatten Platten umfasst, die axial und radial voneinander getrennt sind und alle gemäß einer konstanten Schraubensteigung und mit einer bestimmten Neigung in Bezug auf eine senkrecht zu der Achse (AV) der betrachteten Schnecke (4, 4') verlaufenden Ebene angeordnet sind,
wobei der Mischer (1) **dadurch gekennzeichnet ist, dass** die oder jede Schnecke (4, 4'), über mindestens einen Teil ihrer Länge, eine Vielzahl von zweiten Schaufeln (9) in Form von ebenen Platten umfasst, die voneinander getrennt sind und alle entlang von senkrecht zu der Achse der betrachteten Schnecke (4, 4') verlaufenden Ebenen angeordnet sind, dadurch, dass jede zweite Schaufel (9) eine Winkelerstreckung von weniger als 180°, vorteilhafterweise weniger als 120°, bevorzugt etwa 90° aufweist, und dadurch, dass die zweiten Schaufeln (9) auf der betreffenden Stützwelle (5) so ausgestaltet und angeordnet sind, dass sie eine begrenzte Anzahl von Aneinanderreihungen (7') von Schaufel entlang der Richtung der Achse (AV) der Schnecke (4, 4') und um die Welle (5) herum bilden, wobei sich freiliegende Bereiche zwischen den benachbarten Aneinanderreihungen (7') entlang der Schnecke (4, 4') erstrecken.

2. Mischer nach Anspruch 1, **dadurch gekennzeichnet, dass** mindestens einige erste und/oder zweite Schaufeln (6, 9), an ihrer freien Außenkante (9'), mit mindestens einer angesetzten Abstreifstruktur (12) versehen sind, die in Bezug auf die Kante (9') radial vorspringt und mindestens entlang einer radialen Richtung elastisch verformbar ist

3. Mischer nach Anspruch 1 oder 2, **dadurch gekennzeichnet, dass** jede erste Schaufel (6) eine Winkelerstreckung um die betrachtete Welle herum aufweist, die weniger als 180°, vorteilhafterweise weniger als 120°, bevorzugt etwa 90° beträgt, und dadurch, dass die ersten Schaufeln (6) auf der betreffenden Stützwelle (5) so ausgestaltet und angeordnet sind, dass sie eine begrenzte Anzahl von Aneinanderreihungen (7) von Schaufeln (6) entlang der Richtung der Achse (AV) der Schnecke (4, 4') bilden, die über den Umfang der Stützwelle (5) verteilt sind und die zwischen sich freiliegende Bereiche (8) bilden, die sich entlang der Schnecke (4, 4') zwischen benachbarten Aneinanderreihungen (7) erstrecken.

4. Mischer nach einem der Ansprüche 1 bis 3, **dadurch gekennzeichnet, dass** sich jede Aneinanderreihung (7') von zweiten Schaufeln (9) nur über einen Bruchteil der Länge des sie umfassenden Teils der Schnecke (4, 4') und über einen Bruchteil des Umfangs von deren Welle (5) erstreckt und mindestens eine lokale Gruppe von zweiten Schaufeln (9) bildet, wobei jede Gruppe winklig und/oder axial in Bezug auf jede der anderen Gruppen versetzt ist und mindestens eine, bevorzugt jede, Gruppe von zweiten Schaufeln (9) einer Schnecke (4, 4') mit einer entsprechenden Gruppe von zweiten Schaufeln (9) der anderen Schnecke (4', 4) interstitiell in kämmenden Eingriff gelangt.

5. Mischer nach einem der Ansprüche 1 oder 4, **dadurch gekennzeichnet, dass** der Trog (3), über mindestens einen Teil seiner Innenseite, der gegenüber dem oder den längs verlaufenden, zweite Schaufeln (9) umfassenden Teil(en) der Schnecke (4, 4') gelegen ist, feststehende Gegenschaufeln umfasst, die in parallelen und interstitiellen Ebenen in Bezug auf Ebenen der zweiten Schaufeln (9) gelegen sind und bei der Drehung der betrachteten Schnecke (4, 4') in kämmenden Eingriff mit den zweiten Schaufeln (9) gelangen, wobei jede zusammenwirkende Anordnung von mindestens zwei Gruppen von zweiten Schaufeln (9), die zu jeweils einer der beiden Schnecken (4, 4') gehören, und eventuell von Gegenschaufeln, ein bevorzugtes Scherungsmodul (11) bildet.

6. Mischer nach einem der Ansprüche 1 bis 5, **dadurch gekennzeichnet, dass** die oder jede Schnecke (4, 4') aus unterschiedlichen längs verlaufenden Segmenten gebildet wird, die abwechselnd Aneinanderreihungen von geneigten ersten Schaufeln (6) und Aneinanderreihungen von senkrechten zweiten Schaufeln (9) umfassen.

7. Mischer nach Anspruch 2 oder einem der Ansprüche 3 bis 6, sofern diese abhängig von Anspruch 2 sind, **dadurch gekennzeichnet, dass** die oder jede verformbare angesetzte Struktur (12) aus einem Plättchen (12') oder aus einem Stapel aus mindestens zwei Plättchen (12') besteht, die eine im Wesentlichen elliptische Kontur haben und Ausschnitte umfassen, die eine Vielzahl von konzentrischen elliptischen Ringen (13) definieren, die durch Materialbrücken (13') zwischen benachbarten Ringen (13) verbunden sind, wobei die Struktur an der entsprechenden Schaufel (6, 9) mit einer solchen Ausrichtung angebracht ist, dass die Richtung der kleinen Halbachse der elliptischen Kontur durch die Längsachse (AV) der entsprechenden Stützwelle (5) verläuft.

8. Mischer nach einem der Ansprüche 1 bis 7, **dadurch gekennzeichnet, dass** er zwei parallele Doppelschnecken (4 und 4') umfasst, deren jeweilige Schaufeln (6, 9) sich über mindestens einen Teil ihrer Höhe, bevorzugt einen überwiegenden Teil, eng verschränken, entweder in mindestens einem Bereich des wechselseitigen Verzahnens von gegensinnigen Schraubengängen von ersten Schaufeln (6), die in Bezug auf die Achse der Stützwelle (5) geneigt sind, oder in mindestens einem Bereich des wechselseitigen Kämmens von zweiten Schaufeln (9), die senkrecht zu der Achse der Stützwelle (5) sind, vorteilhafterweise in den beiden Bereichsarten.

9. Anlage (14) zur Verarbeitung und Verwertung von Verbundprodukten auf thermoplastischer Basis, beispielsweise von Abfällen, die überwiegend bituminöse Produkte enthalten, insbesondere bituminöse Dichtungsbahnen, **dadurch gekennzeichnet, dass** sie, als Verarbeitungsstation(en), mindestens einen Mischer (1) nach einem der Ansprüche 1 bis 8 umfasst, bevorzugt als erste Verarbeitungsstation.

10. Verfahren zur Steuerung eines Mischers (1) nach einem der Ansprüche 1 bis 8, das darin besteht, die Schnecke oder Schnecken (4, 4') mit einem Steuerungsprotokoll anzutreiben, das mindestens zwei Antriebsphasen umfasst, die eine Verlagerung der Materialien in dem Mischer (1) entlang der Richtung (DT) des Verarbeitungswegs bewirken und die durch mindestens eine Phase des gegensinnigen, d. h. eine Verlagerung der verarbeiteten Materialien in die zum Verarbeitungsweg entgegengesetzte Richtung bewirkenden, Antriebs getrennt sind, wobei das Vorkommen, die Dauer und die Phasen des gegensinnigen Antriebs entweder vorbestimmt sind oder abhängig von Werten sind, die von Sensoren zur Messung von Betriebsparametern wie beispielsweise dem Antriebmoment, der Zusammensetzung und/oder der Qualität der verarbeiteten Produkte, der Menge von in dem Mischer (1) vorhandenen Materialien, bereitgestellt werden.

## Claims

1. Heating mixer (1) for composite products based on thermoplastic material(s), notably waste from factories or construction sites predominantly containing bituminous membranes, said mixer (1) having an elongate form defining a longitudinal treatment path between an inlet (2) and an outlet (2'), and comprising a heated trough (3) in which at least one screw (4, 4') is mounted, preferably two parallel twinned and mutually interpenetrating screws (4 and 4'), forming (a) dimensional reduction, heating and movement member(s) for the products to be treated introduced at the inlet (2), said or each screw (4, 4') comprising a heated and driven support shaft (5) disposed along the direction (DT) of the path, mixer (1) wherein the thread (4") of the or each screw (4, 4') is an interrupted or discontinuous thread and comprises, over at least a predominant part at least of the length of the screw (4, 4') considered, a plurality of first blades (6) in the form of planar and smooth plates which are separated from one another axially and radially and which are all arranged at a constant thread pitch and with a determined inclination with respect to a plane perpendicular to the axis (AV) of the screw (4, 4') considered,
mixer (1) **characterized in that** the or each screw (4, 4') comprises, over at least a part of its length, a plurality of second blades (9) in the form of planar plates which are separated from one another and which are all arranged along planes perpendicular to the axis of the screw (4, 4') considered, **in that** each second blade (9) has an angular extension of less than 180°, advantageously less than 120°, preferably about 90°, and **in that** said second blades (9) are configured and arranged on the support shaft (5) in question so as to form a limited number of rows (7') of blades in the direction of the axis (AV) of the screw (4, 4') and around the shaft (5), clear zones extending between the neighbouring rows (7') along the screw (4, 4').

2. Mixer according to Claim 1, **characterized in that** at least certain first and/or second blades (6, 9) are provided, at their outer free edge (9'), with at least one attached scraping structure (12) which protrudes radially with respect to said edge (9') and which is elastically deformable at least in a radial direction.

3. Mixer according to Claim 1 or 2, **characterized in that** each first blade (6) has an angular extension around the shaft considered of less than 180°, advantageously less than 120°, preferably about 90°, and **in that** said first blades (6) are configured and arranged on the support shaft (5) in question so as to form a limited number of rows (7) of blades (6) in the direction of the axis (AV) of the screw (4, 4'), said rows being distributed around the circumference of the support shaft (5) and defining between them clear zones (8) extending along the screw (4, 4') between neighbouring rows (7).

4. Mixer according to any one of Claims 1 to 3, **characterized in that** each row (7') of second blades (9) extends only over a fraction of the length of the part of the screw (4, 4') comprising them and over a fraction of the circumference of the shaft (5) of said screw and forms at least one local group of second blades (9), each group being offset angularly and/or axially with respect to each of the other groups, and at least one, preferably each, group of second blades (9) of one screw (4, 4') coming into interpenetrating engagement, in an interstitial manner, with a corresponding group of second blades (9) of the other screw (4', 4).

5. Mixer according to either one of Claims 1 or 4, **characterized in that** the trough (3) comprises, over at least a part of its internal face that is situated facing the longitudinal part(s) of the screw (4, 4') comprising second blades (9), fixed counter-blades which are situated in planes that are parallel and interstitial with respect to the planes of the second blades (9) and which come into interpenetrating engagement with the second blades (9) during the rotation of the screw (4, 4') considered, each cooperating arrangement of at least two groups of second blades (9) respectively belonging to one of the two screws (4, 4'), and possibly of counter-blades, forming a preferred shear module (11).

6. Mixer according to any one of Claims 1 to 5, **characterized in that** the or each screw (4, 4') is formed of differentiated longitudinal segments alternately comprising rows of inclined first blades (6) and rows of perpendicular second blades (9).

7. Mixer according to Claim 2 or any one of Claims 3 to 6 insofar as they are dependent on Claim 2, **characterized in that** the or each deformable attached structure (12) consists of a small plate (12'), or of a stack of at least two small plates (12'), with a substantially elliptical contour and having cutouts defining a plurality of concentric elliptical rings (13), connected by bridges of material (13') between adjacent rings (13), said structure being mounted on the corresponding blade (6, 9) with such an orientation that the direction of the semi-minor axis of the elliptical contour passes through the longitudinal axis (AV) of the corresponding support shaft (5).

8. Mixer according to any one of Claims 1 to 7, **characterized in that** it comprises two twinned parallel screws (4 and 4'), the respective blades (6, 9) of which intertwine intimately over at least a part of their height, preferably a predominant part, either in at least one zone of mutual meshing of opposite threads of first blades (6) inclined with respect to the axis of the support shaft (5), or in at least one zone of mutual interpenetration of second blades (9) perpendicular to the axis of the support shaft (5), advantageously in both types of zones.

9. Installation (14) for treating and recycling thermoplastic-based composite products, for example waste predominately incorporating bituminous products, notably bituminous membranes, **characterized in that** it comprises, as treatment station(s), at least one mixer (1) according to any one of Claims 1 to 8, preferably as first treatment station.

10. Method for controlling a mixer (1) according to any one of Claims 1 to 8, consisting in driving the screw or screws (4, 4') with a control protocol comprising at least two driving phases which cause materials in the mixer (1) to move in the direction (DT) of the treatment path, said driving phases being separated by at least one opposite driving phase, that is to say a driving phase which causes treated materials to move in the direction opposite to the treatment path, the occurrence, the duration and the number of opposite driving phases being either predetermined or dependent on values provided by sensors for measuring operating parameters, such as the driving torque, the composition and/or the quality of the products treated, the quantity of materials present in the mixer (1).
